Europäisches Patentamt

European Patent Office

Office européen des brevets

(11) Publication number: **0 244 376 B1**

# EUROPEAN PATENT SPECIFICATION

(45) Date of publication of patent specification: **03.06.92**   (51) Int. Cl.5: **H02K 33/00**

(21) Application number: **87850082.6**

(22) Date of filing: **16.03.87**

(54) Method for producing linear reciprocating movement of a permanent bar magnet.

(30) Priority: **17.03.86 SE 8601252**

(43) Date of publication of application:
**04.11.87 Bulletin 87/45**

(45) Publication of the grant of the patent:
**03.06.92 Bulletin 92/23**

(84) Designated Contracting States:
**AT CH DE GB LI NL**

(56) References cited:
**WO-A-82/03300**
**DE-A- 2 409 165**
**DE-A- 3 243 151**
**FR-A- 2 490 424**

**PATENT ABSTRACTS OF JAPAN, vol. 5, no. 163 (E-78)[835], 20th October 1981; & JP - A - 56 91681 (EIJI NEGISHI) 24-07-1981**

(73) Proprietor: **Denev, Martin**
**Postfach 5**
**A-2680 Semmering(AT)**

(72) Inventor: **Denev, Martin**
**Postfach 5**
**A-2680 Semmering(AT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

It is a big technical problem to create a screen for permanent magnet field, which can screen the field of a permanent magnet and at the same time be a screen that does not interact itself with the magnetfield of the permanent magnet, with aim to be put periodically, without big energylosses for overcoming of the screen's interaction with the permanent magnet, into the gap between two like poles of the permanent magnets, which under the protection of the screen can be put in position to repel each other when the screen is put away and to thus perform work.

Only permanent magnets and iron can screen the magnetfield of the poles of such a motor, but the screens made of permanent magnets or iron interact too strongly themselves with the poles of the working magnets so that the energy needed to overcome this interaction, between the permanent magnets and iron screens and the poles of the working magnets during the process of periodic screening, is so high that the efficiency of such motors is too low or not existing. Such motors are described for example in US patent 3,609,425, Abstract of Japanese patent application 54-169928 (publication number 56-91681) and DE-A-32 43 153.

With aim to contribute to the solving of this problem to create screen of the permanent magnet field, screen which is interacting itself much weaker with working poles of the permanent magnets during the process of the periodic screening, than the existing known screens, is suggested; this screen, numbers 2 and 4 of Figs. 0, 1 and 2, is constructed by two permanent bar magnets mounted together in anti-parallel fashion, with S-pole to N-pole and N-pole to S-pole, with aim to create magnetcircuit screening the magnetfields of the like poles of 1 and 3 (Figs. 0, 1 and 2) and the like poles of 3 and 5 (Figs. 0, 1 and 2), so that the like poles of 1 and 3 (Figs. 0, 1 and 2) and 3 and 5 (Figs. 0, 1 and 2) under the protection of the screens 2 and 4 can be put in the gap 6 (Fig. 1) and gap 7 (Fig. 2) in position to repel each other periodically and perform work.

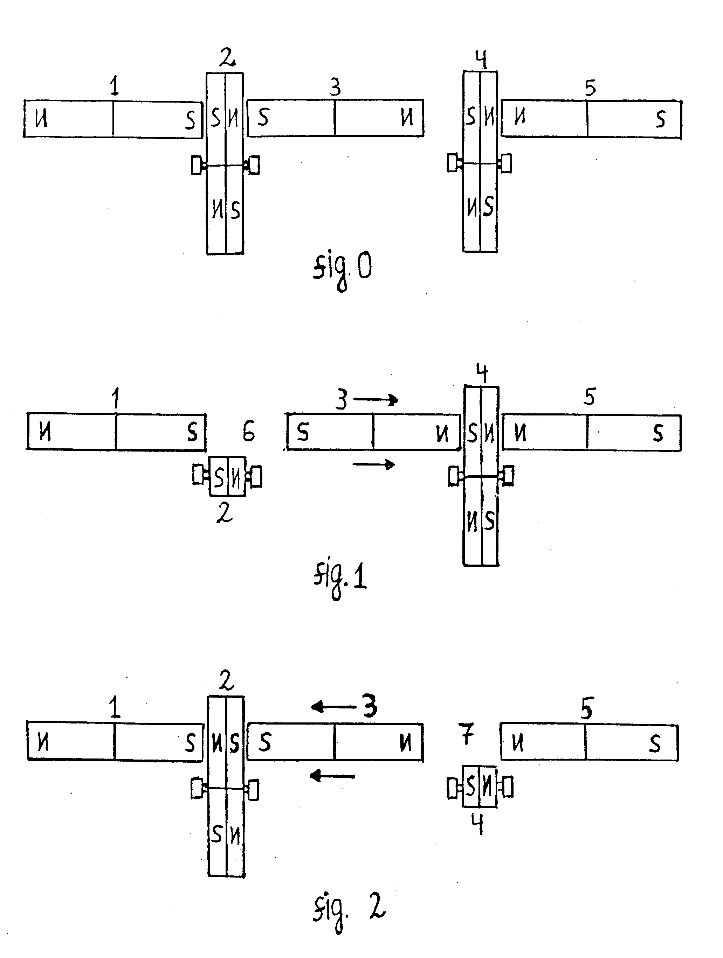

## Claims

1. Method of producing linear reciprocating movement of a permanent bar magnet (3) between first and second stationary permanent bar magnets (1,5), the reciprocating and stationary magnets being arranged with their magnetic axes aligned in a substantially straight line with each pole of the reciprocating magnet (3) facing a like pole of one of the stationary magnets (1,5), in which method a first magnetic screen (2) is periodically inserted into and withdrawn from a first air gap (6) between the first stationary magnet (1) and the reciprocating magnet (3) and, in alternation therewith, a second magnetic screen (4) is periodically inserted into and withdrawn from a second air gap (7) between the second stationary magnet (5) and the reciprocating magnet (3), whereby the reciprocating magnet (3) is displaced towards whichever one of the air gaps (6,7) has a screen inserted in it, characterised in that the first and second magnetic screens (2,4) are each composed of a pair of permanent bar magnets mounted side by side in anti-parallel fashion with S-pole to N-pole and N-pole to S-pole.

## Revendications

1. Methode de production d'un mouvement alternatif linéaire d'un barreau aimanté permanent (3), entre le premier et le second barreau aimanté permanent fixe (1,5), les aimants alternatifs et fixes étant ordonnés avec leurs axes magnétiques alignés dans une ligne tout à fait droite, chaque pôle de l'aimant alternatif (3) tourné vers le pôle similaire d'un des aimants fixes (1,5), avec cette méthode un premier écran magnétique (2) est inséré régulièrement et écarté d'un premier espace rempli d'air (6) entre le premier aimant fixe (1) et l'aimant alternatif (3), en alternance avec cela, un second écran magnétique (4) est régulièrement inséré et écarté d'un second espace rempli d'air (7) entre le second aimant fixe (5) et l'aimant alternatif (3), par lequel l'aimant alternatif (3) est mis en mouvement dans la direction de celui des espaces remplis d'air (6, 7) qui a un écran inséré dedans, caractérisé par le fait que le premier et le second écrans magnétiques (2, 4) sont tous les deux composés d'une paire de barreaux aimantés permanents, disposés les uns à côté des autres d'une façon opposée avec le pôle-S vers le pôle-N et le pôle-N vers le pôle-S.

## Patentansprüche

1. Verfahren zur Erzeugung einer linearen Hin- und Herbewegung bei einem Stabdauermagneten (3) zwischen erstem und zweitem feststehenden Stabdauermagneten (1, 5), die sich hin- und herbewegenden und die feststehenden Magnete so angeordnet mit ihren magnetischen Achsen in ganz gerader Linie mit jedem Pol des sich hin- und herbewegenden Magnets (3) ausgerichtet, dem gleichen Pol eines der feststehenden Magnete (1, 5) gegenüberstehend, bei diesem Verfahren wird ein erster Magnetschirm (2) regelmäßig eingefügt und entfernt aus einem ersten Luftraum (6) zwischen dem ersten feststehenden Magnet (1) und dem sich hin- und herbewegenden Magnet (3) und, alternierend dazu, wird ein zweiter Magnetschirm regelmäßig eingefügt und entfernt aus einem zweiten Luftraum (7) zwischen dem zweiten feststehenden Magnet (5) und dein sich hin- und herbewegenden Magnet (3), wobei der sich hin- und herbewegende Magnet (3) in Richtung auf jenen der Lufträume (6, 7) zu bewegt wird, der darin einen Schirm eingefügt hat, gekennzeichnet dadurch, daß der erste und zweite magnetische Schirm (2, 4) jeweils zusammengesetzt sind aus einem Paar Stabdauermagneten, nebeneinander angebracht in entgegengesetzter Art mit S-Pol zu N-Pol und N-Pol zu S-Pol.

fig. 0

fig. 1

fig. 2